(19) **Europäisches Patentamt**
European Patent Office
Office européen des brevets

(11) **EP 2 107 672 A1**

(12) **EUROPÄISCHE PATENTANMELDUNG**

(43) Veröffentlichungstag:
**07.10.2009 Patentblatt 2009/41**

(51) Int Cl.:
*H02M 1/12* (2006.01)   *H02M 7/483* (2007.01)
*H02J 3/38* (2006.01)

(21) Anmeldenummer: **08006584.0**

(22) Anmeldetag: **31.03.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **SMA Solar Technology AG**
**34266 Niestetal (DE)**

(72) Erfinder:
• **Falk, Andreas**
**34131 Kassel (DE)**
• **DeBrabandere, Karel, Dr.**
**34119 Kassel (DE)**
• **Greizer, Frank**
**34260 Kaufungen (DE)**

• **Victor, Matthias, Dr.**
**34266 Niestetal (DE)**
• **Westphal, Torben**
**34127 Kassel (DE)**
• **Wolf, Henrik, Dr.**
**34123 Kassel (DE)**
• **Buelo, Thorsten**
**34119 Kassel (DE)**

(74) Vertreter: **Walther, Walther & Hinz GbR**
**Heimradstrasse 2**
**34130 Kassel (DE)**

Bemerkungen:
Geänderte Patentansprüche gemäss Regel 137(2) EPÜ.

(54) **Dreiphasiger Wechselrichter ohne Verbindung zwischen dem Neutralleiter des Netzes und dem Mittelpunkt des Zwischenkreises**

(57)   Die vorliegende Erfindung betrifft einen dreiphasigen Wechselrichter (1) mit einer Schaltungsanordnung mit einem DC-Spannungseingang (2) für mindestens eine Gleichspannungsquelle, und mit einem dreiphasigen Wechselspannungsausgang (15) zur Einspeisung in ein dreiphasiges Wechselspannungsnetz (19), der eine dreiphasige Brückenschaltung (20) sowie wenigstens einen geteilten Zwischenkreis enthält, wobei der Wechselrichter (1) transformatorlos ausgeführt ist, wobei der Neutralleiter (N) des Netzes (19) vom Mittelpunkt (M) des Zwischenkreises getrennt ist, und der Wechselrichter (1) durch einen Dreileiteranschluss (15) mit dem Wechselspannungsnetz (19) verbunden ist.

Fig. 1

EP 2 107 672 A1

**Beschreibung**

Die Erfindung betrifft einen dreiphasigen Wechselrichter mit einer Schaltungsanordnung mit einem DC-Spannungseingang für mindestens eine Gleichspannungsquelle und mit einem dreiphasigen Wechselspannungsausgang zur Einspeisung in ein dreiphasiges Wechselspannungsnetz.

Bisherige Lösungen für die Einspeisung elektrischer Energie in ein Dreiphasen-Niederspannungsnetz über einen trafolosen Wechselrichter mit Spannungszwischenkreis verwenden einen Vierleiter-Anschluss, bei dem alle drei Phasen und der Neutralleiter mit dem Wechselrichter verbunden werden. Dabei kombiniert man drei Einphasen-Wechselrichter gleichen Typs zu einem Drehstromsystem. Bei dieser Art der Verschaltung muss die Zwischenkreisspannung für den Netzparallelbetrieb mindestens der doppelten Amplitude der Leiter-Neutralleiter-Spannung exklusive einer Regelreserve entsprechen. Nachteilig hierbei sind die hohen Spannungsbelastungen der Leistungshalbleiter sowie der Glättungsdrosseln, die zu Einbußen im Wirkungsgrad führen.

Bekannt ist, dass der Wirkungsgrad der Wechselrichter durch Multi-Level-Topologien gesteigert werden kann, was durch eine Aufteilung der Schalt-und Durchlassleistung auf mehrere Halbleiterschalter erreicht wird. Ferner fallen Belastung und Baugröße der induktiven Glättungsfilter auf der Netzseite bei diesen Schaltungen geringer als bei Zwei-Level-Topologien aus, da der Grundschwingungsanteil in der Klemmenspannung der Wechselrichterbrücke durch mehrere diskret schaltbare Spannungslevel vergrößert wird. Für die Einspeisung in das Niederspannungsnetz stellen Drei-Level-Topologien die am weitesten verbreitete und meist auch wirtschaftlichste Methode dar.

In der WO 2007/048420 A1 wird ein Drei-Level-Wechselrichter zur Einspeisung eines Photovoltaikstroms in ein dreiphasiges Netz beschrieben. Diese Schaltung soll auch einer hohen parasitären Kapazität von Photovoltaikgeneratoren Rechnung tragen, die zu unerwünschten parasitären Strömen führen kann. Parallel zu einem Photovoltaikgenerator sind zwei Kondensatoren angeschlossen, die mit einem dreiphasigen DC/AC- Wandler verbunden sind. Am Ausgang des DC/AC-Wandlers ist ein Drehstrom-Transformator vorgesehen, der sekundärseitig mit dem Drehstromnetz verbunden ist. Ein Mittenabgriff am Verknüpfungspunkt der Kondensatoren ist mit einem primärseitigen Sternpunkt des Transformators verbunden. Der Ausgang des Transformators ist durch einen Dreileiteranschluss mit dem Netz verbunden. Diese Lösung ist jedoch nicht transformatorlos.

Ein transformatorloser Wechselrichter der eingangs genannten Art mit einer Multi-Level-Schaltung ist aus der DE 10 2006 010 694 A1 bekannt. Es ist beschrieben, dass die an dem Photovoltaikgenerator anliegende Spannung wenigstens den Betrag des Scheitelwertes der Leiter-Neutralleiter-Spannung des Netzes aufweisen muss. Durch die Wechselrichterschaltung soll die Gleichspannung in eine Wechselspannung einer bestimmten Frequenz auch bei unzureichenden Eingangsspannungsgleichwerten, insbesondere unterhalb des Scheitelwertes der Leiter-Neutralleiter-Spannung des Netzes mit hohem Wirkungsgrad, umgewandelt werden. Schaltverluste sowie Ummagnetisierungsverluste und Rippelströme einer Drossel sollen reduziert werden. Diese Multi-Level-Schaltung weist zwei DC-DC-Hochsetzsteller auf, so dass die Eingangsspannung auf ein höheres Potential heraufgesetzt wird. An einer aus Schaltern bestehenden Halbbrücke ist ein Mittenabgriff vorhanden. Am Ausgang des Hochsetzstellers ist jeweils ein Pufferkondensator angeschlossen, dessen anderer Anschluss mit dem Neutralleiter verbunden ist. Die Schaltungsanordnung enthält außerdem zwei Freilaufpfade, die parallel zueinander zwischen dem Mittenabgriff der Halbbrücke und dem Neutralleiter verlaufen. Jeder Freilaufpfad weist einen Schalter mit einer Freilaufdiode auf. Diese multiple Verschaltung ist allerdings nur für einen einphasigen Anschluss an das Niederspannungsnetz ausgeführt. Bei einer Erweiterung zu einem dreiphasigen System führt sie jedoch zu einer Schaltung mit einem Vierleiter-Anschluss. Die notwendige Mindestspannung für einen Netzparallelbetrieb wird, wenn das Spannungsniveau der DC-Quelle unter den Minimalwert sinkt, von dem Hochsetzsteller in einem zusätzlichen Zwischenkreis bereitgestellt. Hierbei muss die gesamte Zwischenkreisspannung im Bereich der Netzkuppenspannung mindestens der doppelten Amplitude der Leiter-Neutralleiter-Spannung des Netzes entsprechen.

Der Erfindung liegt die Aufgabe zugrunde, einen Wechselrichter der eingangs genannten Art so weiter zu bilden, dass dieser für ein dreiphasiges Niederspannungsnetz geeignet ist, wobei ein hoher Wirkungsgrad erreicht werden soll.

Diese Aufgabe wird dadurch gelöst, dass die Schaltungsanordnung drei Brückenzweige mit jeweils in Reihe geschalteten Schaltern und jeweils einem aktiven Freilaufzweig für jeden Brückenzweig bestehend aus einer bidirektionellen Halbleiterschalteranordnung umfasst, wobei der Wechselrichter durch einen Dreileiteranschluss mit dem Niederspannungsnetz verbunden ist, und dass der Mittelpunkt des Zwischenkreises von einem Neutralleiter eines dreiphasigen Niederspannungsnetzes getrennt ist.

Weitere vorteilhafte Ausgestaltungen der Erfindung sind in den Unteransprüchen gekennzeichnet.

Die Erfindung schafft unter Vermeidung der Nachteile aus dem Stand der Technik die Einspeisung in das Niederspannungsnetz mit einer Zwischenkreisspannung, deren Amplitudenhöhe, insbesondere exklusive einer Regelreserve der Leiter-Leiterspannung des Netzes entspricht. Dadurch wird ein hoher Wirkungsgrad erreicht. Die Schaltungstopologie entspricht einer Multi-Level-Schaltung mit aktiv geschaltetem Freilaufzweig, der aus einem bidirektionellen Halbleiterschalter besteht.

Die Erfindung beruht auf dem Gedanken, den Mittelpunkt des Zwischenkreises nicht mit einem Neutralleiter des Netzes zu verbinden sowie einen Dreileiteranschluss anstatt eines Vierleiteran-schlusses einzusetzen.

Durch die erfindungsgemäße Schaltung wird für den transformatorlosen Netzparallelbetrieb einer Energieerzeugungsanlage nur eine minimal mögliche Zwischenkreisspannung benötigt.

Die Verluste innerhalb des Wechselrichters sind geringer als bei einem Vierleitersystem.

Hochfrequente Potentialsprünge an der DC-Quelle und damit parasitäre kapazitive Ströme am Generator werden prinzipbedingt vermieden.

Zudem werden hohe Spannungsbelastungen der Leistungshalbleiter sowie der Glättungsdrosseln, die zu Einbußen im Wirkungsgrad führen, vermieden.

In einer vorteilhaften Weiterbildung des erfindungsgemäßen Wechselrichters ist vorgesehen, dass zwischen dem AC-Ausgang und einem Netzeingang des dreiphasigen Niederspannungsnetzes ein Netzfilter geschaltet ist, der für jeden Brückenzweig zwei in Reihe geschaltete Drosseln und einen zwischen den Drosseln geschalteten Kondensator umfasst, wobei jeder Kondensator nur mit dem Mittelpunkt des Zwischenkreises verbunden ist, so dass der Neutralleiter des Netzes vom Mittelpunkt des Zwischenkreises getrennt ist. Durch diese Maßnahme ist es in einfacher Weise möglich, einerseits ein sinusförmiges Signal zu realisieren und dabei den Mittelpunkt des Zwischenkreises von dem Neutralleiter des dreiphasigen Niederspannungsnetzes zu trennen, und zwar ohne dass ein Transformator notwendig ist.

Durch den Einsatz des geteilten Zwischenkreises, der durch zwei in Reihe geschaltete Kondensatoren gebildet wird, die an ihrem Verknüpfungspunkt mit den Filterkondensatoren verbunden sind, ist der Einsatz eines einzigen Generators möglich. Die Generatorspannung teilt sich in den insbesondere identischen Kondensator auf, so dass drei Spannungspegel vorhanden sind. Eine Drei-Level-Schaltung ist daher möglich.

Vorteilhaft ist es, wenn die bidirektionelle Halbleiterschalteranordnung zwei in entgegengesetzte Polungsrichtung geschaltete Schalter mit jeweils antiparallelen Dioden umfasst. Durch diese aktiven Freilaufpfade ist ein hoher Wirkungsgrad bei einem Drehstromsystem möglich.

Zweckmäßigerweise entspricht eine Zwischenkreisspannung exklusive einer Regelreserve genau der Amplitude der Leiter-Leiter-Spannung des dreiphasigen Netzes. Die Regelreserve beträgt insbesondere etwa 0 bis 15 %, insbesondere etwa 10% der Leiter-Leiter-Spannung. Beträgt der Effektivwert der Leiter-Leiter-Spannung 400V, so beträgt bei einer Regelreserve von z.B. 20V die Zwischenkreisspannung bzw. die Generator-spannung $585V = (400V \times \sqrt{2}) + 20V.$

Grundsätzlich kann die Multi-Level-Schaltung mehr als drei Spannungspegel aufweisen. Besonders wirtschaftlich ist es jedoch wenn die Multi-Level-Schaltungsanordnung als Drei-Level-Schaltung ausgeführt ist. Es sind nur zwei Pufferkondensatoren und ein bzw. zwei Generatoren erforderlich. Zusätzliche Hochsetzsteller, die zusätzliche Verluste verursachen, sind nicht nötig.

Grundsätzlich können an dem Wechselrichter DC-Quellen, wie Brennstoffzellen, Batterien oder andere Gleichspannungsgeneratoren angeschlossen werden. In einer weiteren bevorzugten Ausgestaltung der Erfindung ist vorgesehen, dass an dem Wechselrichter mindestens ein Photovoltaikgenerator am DC-Spannungseingang anschließbar ist. Typische hochfrequente Potentialsprünge am Photovoltaikgenerator durch Taktung der Schalter werden vermieden. Ohne Weiteres kann dann ein Pulsweitenverfahren oder ein anderes Taktungsverfahren eingesetzt werden, das diese Taktung erfordert.

Anhand der Zeichnung wird die Erfindung nachstehend beispielhaft näher erläutert.

Die Figur zeigt ein Schaltbild einer bevorzugten Ausführungsform einer erfindungsgemäßen Schaltungsanordnung eines Wechselrichters.

Der gezeigte Wechselrichter 1 umfasst eine Multi-Level-Schaltungsanordnung mit einem DC-Spannungseingang 2 für mindestens eine Gleichspannungsquelle, insbesondere einem Photovoltaikgenerator 3. Es können aber auch mehrere Photovoltaikgeneratoren in Reihe und/oder parallel geschaltet sein.

Vorhanden ist ein geteilter Zwischenkreis, der durch zwei Pufferkondensatoren 4, 5 gebildet ist. Weiterhin ist ein Brückenzweig 6 mit zwei in Reihe geschalteten Schaltelementen V11, V14 und einem aktiven Freilaufpfad 9 vorhanden. Der Wechselrichter hat einen AC-Ausgang 15 zur Einspeisung in ein Niederspannungsnetz 19. Der Wechselrichter 1 ist transformatorlos ausgeführt.

Der Generator 3 liefert die Zwischenkreisspannung Uzwk, die in jedem Pufferkondensator 4, 5 halbiert ist. Es sind also am Kondensatorzweig drei Spannungspegel, z.B. 0V, 300V und 600 V, messbar. Die Schaltungsanordnung ist als Drei-Level-Schaltung ausgeführt.

Erfindungsgemäß umfasst die Schaltungsanordnung drei Brückenzweige 6, 7, 8 mit jeweils in Reihe geschalteten Schaltern V11, V14 und V21, V24 und V31 V34. Jeder Brückenzweig 6, 7, 8 hat jeweils einen aktiven Freilaufzweig 12, 13, 14 bestehend aus einer aktiven bidirektionellen Halbleiterschalteranordnung.

Erfindungsgemäß ist der Wechselrichter 1 durch einen Dreileiteranschluss mit dem Niederspannungsnetz N verbunden, wie die Figur veranschaulicht, wobei ein Mittelpunkt M des Zwischenkreises von einem Neutralleiter des dreiphasigen Niederspannungsnetzes N getrennt ist. Die drei Leiter entsprechen den Phasen L1, L2, L3.

Jeder Schalter V11, V14 und V21, V24 und V31, V34 ist mit einer antiparallelen Freilaufdiode D11, D14 und D21, D24 und D31, D34 versehen.

Die Figur zeigt weiterhin, dass zwischen dem AC-Ausgang 11 und einem Netzeingang 15 des dreiphasigen Niederspannungsnetzes N ein Netzfilter geschaltet ist. Dieser umfasst sechs Drosseln und drei Kondensatoren, und zwar für jeden Brückenzweig 6, 7, 8 zwei in Reihe geschaltete Drosseln 16, 17 und einen zwischen den Drosseln 16, 17 geschalteten Kondensator 18. Jeder Kondensator 18 ist nur mit dem Mittelpunkt M des Zwischenkreises verbunden. Der Neutralleiter des Netzes N ist somit vom Mittelpunkt M des Zwischenkreises getrennt. Der Filterkondensator 18 ist also an seinem einen Ende mit dem Verknüpfungspunkt A der Drosseln 16, 17 angeschlossen und mit seinem anderen Ende bzw. Punkt B an dem Mittelpunkt M angeschlossen. Der geteilte Zwischenkreis wird durch die beiden Kondensatoren 4, 5 gebildet, die an ihrem Verknüpfungspunkt B mit den Filterkondensatoren 18 verbunden sind. Durch den Filter wird die Ausgangsspannung am AC-Ausgang geglättet und erreicht eine Sinusform. Wie außerdem die Figur veranschaulicht, umfasst die bidirektionelle Halbleiterschalteranordnung zwei in entgegengesetzte Polungsrichtung geschaltete Schalter V12, V13 bzw. V22, V23 bzw. V32, V33 mit jeweils antiparallelen Dioden D12, D12 bzw. D22, D23 bzw. D32, D33. Die Schalter V12, V13 bzw. V22, V23 bzw. V32, V33 werden aktiv gesteuert, so dass hochfrequente Spannungen vermieden werden. Schaltverluste sowie Ummagnetisierungsverluste und Rippelströme der Drosseln 16, 17 werden dabei ebenfalls reduziert.

Die Frequenz des Netzes kann 50 Hz oder 60 Hz sein. Die Zwischenkreisspannung Uzwk ist etwas höher als der Scheitelwert der Leiter-Leiter-Spannung von z.B. 565 V. Vorzugsweise entspricht die Zwischenkreisspannung Uzwk exklusive einer Regelreserve des Scheitelwertes genau der Leiter-Leiter-Spannung von z.B. 565 V des dreiphasigen Netzes 19. Die Regelreserve kann z.B. 20 Volt betragen, so dass im Regelfall eine Netztrennung vermieden wird.

Der Generator 3 hat eine Kapazität gegen Erde. Durch die gezeigte Schaltung werden parasitäre kapazitive Erdableitströme eines Photovoltaikgenerators 3 reduziert.

Die gezeigte Schaltungsanordnung gestattet die trafolose Einspeisung in das Niederspannungsnetz N ab einer Zwischenkreisspannung Uzwk, deren Höhe exklusive einer Regelreserve genau der Amplitude der Leiter-Leiter-Spannung des Netzes N von z.B. 565 V entspricht. Im Gegensatz zu Vierleiter-Systemen, bei denen der Neutralleiter des Netzes N mit dem Mittelpunkt M des Zwischenkreises starr verbunden ist, reduziert sich bei der erläuterten Schaltung die minimal notwendige Zwischenkreisspannung um den Faktor 0.866.

Durch Nutzung geeigneter Modulationsverfahren, wie z.B. Raumzeigermodulation oder Modulation mit der überlagerten dritten Harmonischen oder anderen Modulationsverfahren, wird der Wirkungsgrad verbessert.

Die Trennung des Mittelpunktes M des Zwischenkreises vom Neutralleiter des Netzes N verhindert dabei die Ausbreitung von Strömen in das Netz, die sonst durch das Nullsystem angeregt würden. Die resultierende treibende Spannung für die Netzströme enthält somit kein Nullsystem mehr und ist in ihrer maximalen Amplitude um den Faktor 1,155 (= 1/0,866) größer als die Zwischenkreisspannung.

Zur Vermeidung unerwünschter hochfrequenter Ableitströme aus den DC-Generatoren erzeugt die gezeigte Schaltungsanordnung keine hochfrequente Potenzialsprünge und nur geringfügige niederfrequente Potenzialänderungen, deren Frequenz typischerweise der dreifachen Netzfrequenz und deren Amplitude typischerweise maximal 13,4 % der Netzspannungsamplitude entspricht.

Die Erfindung ist nicht nur auf dieses Ausführungsbeispiel beschränkt. So können auch Hochsetzsteller oder andere DC-DC-Stufen angeschlossen sein, um weitere Level bzw. Potentiale zu schaffen

Auch kann jedes beschriebene oder gezeigte Einzelmerkmal beliebig mit einem anderen Merkmal kombiniert werden.

Bezugszeichenliste:

| | |
|---|---|
| 1 | Wechselrichter |
| 2 | DC-Spannungseingang |
| 3 | Photovoltaikgenerator |
| 4, 5 | Pufferkondensatoren |
| 6, 7, 8 | Brückenzweige |
| 9 | Freilaufpfad |
| 10 | - |
| 11 | AC-Ausgang |
| 12, 13, 14 | Freilaufzweige |
| 15 | Netzeingang |
| 16, 17 | Drosseln |
| 18 | Filterkondensator |
| 19 | Niederspannungsnetz |
| 20 | Brückenschaltung |
| 21 | Netzfilter |
| N | Neutralleiter |
| M | Mittelpunkt des Zwischenkreises |
| A | Verknüpfungspunkt der Drosseln |

**Patentansprüche**

1. Dreiphasiger Wechselrichter (1) mit einer Schaltungsanordnung mit einem DC-Spannungseingang (2) für mindestens eine Gleichspannungsquelle, und mit einem dreiphasigen Wechselspannungsausgang (15) zur Einspeisung in ein dreiphasiges Wechselspannungsnetz (19), der eine dreiphasige Brückenschaltung (20) sowie wenigstens einen geteilten Zwischenkreis, wobei der Wechselrichter (1) transformatorlos ausgeführt ist, wobei der Neutralleiter (N) des Netzes (19) vom Mittelpunkt (M) des Zwischenkreises getrennt ist, und der Wechselrichter (1) durch einen Dreileiteranschluss (15) mit dem Wechselspannungsnetz (19) verbunden ist.

2.  Dreiphasiger Wechselrichter nach Anspruch 1,
    **dadurch gekennzeichnet,**
    **dass** der Netzfilter an jedem Ausgang der Brückenschaltung wenigstens eine Speicherdrossel sowie wenigstens einen Kondensator umfasst, und wobei jeder Kondensator nur mit dem Mittelpunkt (M) des Zwischenkreises verbunden ist, so dass der Neutralleiter (N) des Netzes (19) vom Mittepunkt (M) des Zwischenkreises getrennt ist.

3.  Dreiphasiger Wechselrichter nach Anspruch 1 oder 2,
    **dadurch gekennzeichnet,**
    **dass** der geteilte Zwischenkreis durch zwei in Reihe geschaltete Kondensatoren (4, 5) gebildet wird, die an ihrem Verknüpfungspunkt (A) mit den Filterkondensatoren (18) verbunden sind.

4.  Dreiphasiger Wechselrichter nach einem der vorhergehenden Ansprüche,
    **dadurch gekennzeichnet,**
    **dass** die Schaltungsanordnung als Multi-Level-Schaltungsanordnung ausgeführt ist.

5.  Dreiphasiger Wechselrichter nach Anspruch 4,
    **dadurch gekennzeichnet,**
    **dass** die Multi-Level-Schaltungsanordnung als Drei-Level-Schaltung ausgeführt ist.

6.  Dreiphasiger Wechselrichter nach Anspruch 5,
    **dadurch gekennzeichnet,**
    **dass** die Drei-Level-Schaltungsanordnung drei Brückenzweige mit jeweils in Reihe geschalteten Schaltern und jeweils einem aktiven Freilaufzweig für jeden Brükkenzweig bestehend aus einer bidirektionellen Halbleiteranordnung umfasst.

7.  Dreiphasiger Wechselrichter nach Anspruch 6,
    **dadurch gekennzeichnet,**
    **dass** die bidirektionelle Halbleiterschalteranordnung zwei in entgegengesetzte Polungsrichtung geschaltete Schalter (V12, V13 bzw. V22, V23 bzw. V32, V33) mit jeweils antiparallelen Dioden (D12, D12 bzw. D22, D23 bzw. D32, D33) umfasst.

8.  Dreiphasiger Wechselrichter nach einem der voranstehenden Ansprüche,
    **dadurch gekennzeichnet,**
    **dass** eine Zwischenkreisspannung exklusive einer Regelreserve der Amplitude der Leiter-Leiter-Spannung des dreiphasigen Netzes (19) entspricht.

9.  Dreiphasiger Wechselrichter nach einem der voranstehenden Ansprüche,
    **gekennzeichnet durch,**
    eine Ausführung derart, dass mindestens ein Photovoltaikgenerator (3) am DC-Spannungseingang (2) anschließbar ist.

10. Dreiphasiger Wechselrichter nach einem der voranstehenden Ansprüche,
    **dadurch gekennzeichnet,**
    **dass** die Brückenschaltung derart angesteuert wird, dass die Spannung zwischen dem Mittelpunkt des Zwischenkreises und dem Neutralleiter des Netzes nur aus Komponenten des Nullsystems besteht.

11. Dreiphasiger Wechselrichter nach Anspruch 1,
    **dadurch gekennzeichnet,**
    **dass** der Wechselrichter (1) einen Netzfilter (21) umfasst.

**Geänderte Patentansprüche gemäss Regel 137(2) EPÜ.**

**1.** Dreiphasiger Wechselrichter (1) mit einer Drei-Level-Schaltungsanordnung *[Anspruch 5]*, mit einem DC-Spannungseingang (2) für mindestens eine Gleichspannungsquelle, und mit einem dreiphasigen Wechselspannungsausgang (15) zur Einspeisung in ein dreiphasiges Wechselspannungsnetz (19), und der wenigstens einen geteilten Zwischenkreis aufweist, wobei der Neutralleiter (N) des Netzes (19) vom Mittelpunkt (M) des Zwischenkreises getrennt ist, und wobei ein Netzfilter (21) an jedem Ausgang der Brückenschaltung (20) wenigstens eine Speicherdrossel sowie wenigstens einen Kondensator umfasst, wobei der Wechselrichter (1) eine dreiphasige Brückenschaltung (20) umfasst, transformatorlos ausgeführt ist und durch einen Dreileiteranschluss (15) mit dem Wechselspannungsnetz (19) verbunden ist *[Anspruch 1]*,
**dadurch gekennzeichnet,**

- **dass** jeder Kondensator nur mit dem Mittelpunkt (M) des Zwischenkreises verbunden ist, so dass der Neutralleiter (N) des Netzes (19) vom Mittelpunkt (M) des Zwischenkreises getrennt ist *[Anspruch 2]*,
- wobei der geteilte Zwischenkreis durch zwei in Reihe geschaltete Kondensatoren (4, 5) gebildet wird, die an ihrem Verknüpfungspunkt (A) mit den Filterkondensatoren (18) verbunden sind *[Anspruch 3]*, und
- wobei der Wechselrichter derart ausgeführt ist, dass mindestens ein Photovoltaikgenerator (3) am DC-Spannungseingang (2) anschließbar ist *[Anspruch 9]*.

**2.** Dreiphasiger Wechselrichter nach Anspruch 1, **dadurch gekennzeichnet,** **dass** die Drei-Level-Schaltungsanordnung drei Brückenzweige mit jeweils in Reihe geschalteten Schaltern und jeweils einem aktiven Freilaufzweig für jeden Brükkenzweig bestehend aus einer bidirektionellen Halbleiteranordnung umfasst.

**3.** Dreiphasiger Wechselrichter nach Anspruch 2, **dadurch gekennzeichnet,** **dass** die bidirektionelle Halbleiterschalteranordnung zwei in entgegengesetzte Polungsrichtung geschaltete Schalter (V12, V13 bzw. V22, V23 bzw. V32, V33) mit jeweils antiparallelen Dioden (D12, D13 bzw. D22, D23 bzw. D32, D33) umfasst.

**4.** Dreiphasiger Wechselrichter nach einem der Ansprüche 1 bis 3, **dadurch gekennzeichnet,** **dass** eine Zwischenkreisspannung exklusive einer Regelreserve der Amplitude der Leiter-Leiter-Spannung des dreiphasigen Netzes (19) entspricht.

**5.** Dreiphasiger Wechselrichter nach einem der voranstehenden Ansprüche, **gekennzeichnet durch** eine Ausführung derart, dass mindestens ein Photovoltaikgenerator (3) am DC-Spannungseingang (2) anschließbar ist.

**6.** Dreiphasiger Wechselrichter nach einem der voranstehenden Ansprüche, **dadurch gekennzeichnet,** **dass** die Brückenschaltung derart angesteuert wird, dass die Spannung zwischen dem Mittelpunkt des Zwischenkreises und dem Neutralleiter des Netzes nur aus Komponenten des Nullsystems besteht.

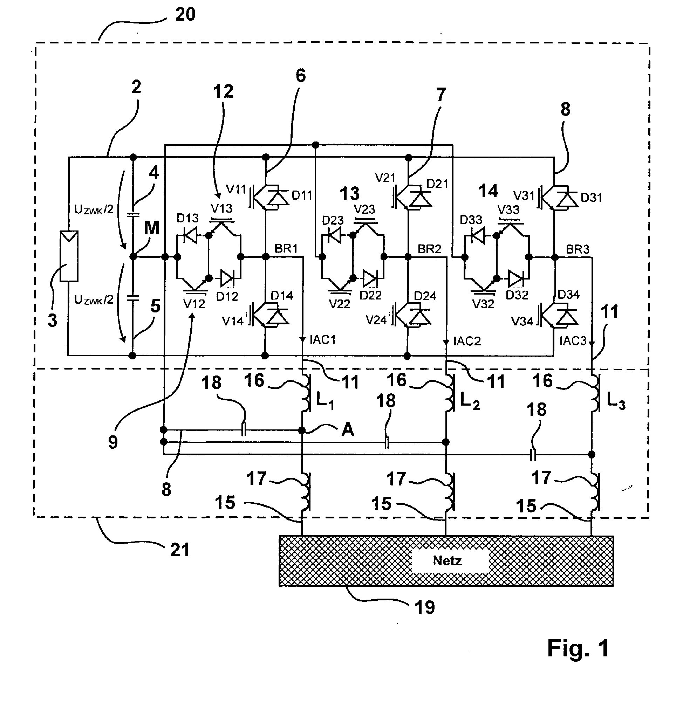

Fig. 1

**Europäisches Patentamt**

**EUROPÄISCHER RECHERCHENBERICHT**

Nummer der Anmeldung

EP 08 00 6584

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | LOIX T ET AL: "A Three-Phase Voltage and Frequency Droop Control Scheme for Parallel Inverters" INDUSTRIAL ELECTRONICS SOCIETY, 2007. IECON 2007. 33RD ANNUAL CONFERENCE OF THE IEEE, IEEE, PISCATAWAY, NJ, USA, 5. November 2007 (2007-11-05), Seiten 1662-1667, XP031234960 ISBN: 978-1-4244-0783-5 * Abbildung 5(b) * | 1,2,4-11 | INV. H02M1/12 H02M7/483 H02J3/38 |
| Y | XIYOU CHEN ET AL: "A Novel Inverter-Output Passive Filter for Reducing Both Differential-and Common-Mode at the Motor Terminals in PWM Drive Systems" IEEE TRANSACTIONS ON INDUSTRIAL ELECTRONICS, IEEE SERVICE CENTER, PISCATAWAY, NJ, USA, Bd. 54, Nr. 1, 1. Februar 2007 (2007-02-01), Seiten 419-426, XP011163633 ISSN: 0278-0046 * Abbildung 1 * * Zusammenfassung * | 3 | |
| A | | 1,2,4-11 | RECHERCHIERTE SACHGEBIETE (IPC) H02M H02J |
| Y | US 4 670 828 A (SHEKHAWAT SAMPAT S [US] ET AL) 2. Juni 1987 (1987-06-02) * Abbildungen 1,3,5,6 * * Spalte 2, Zeile 65 - Spalte 3, Zeile 16 * * Spalte 4, Zeilen 26-30 * * Spalte 6, Zeilen 57-60 * | 1-11 | |
| D,A | DE 10 2006 010694 A1 (REFU ELEKTRONIK GMBH [DE]) 20. September 2007 (2007-09-20) * Abbildung 1 * | 9 | |

Der vorliegende Recherchenbericht wurde für alle Patentansprüche erstellt

| Recherchenort | Abschlußdatum der Recherche | Prüfer |
|---|---|---|
| München | 8. September 2008 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes Dokument

EPO FORM 1503 03.82 (P04C03)

EP 2 107 672 A1

**ANHANG ZUM EUROPÄISCHEN RECHERCHENBERICHT**
**ÜBER DIE EUROPÄISCHE PATENTANMELDUNG NR.**

EP 08 00 6584

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2008

| Im Recherchenbericht angeführtes Patentdokument | Datum der Veröffentlichung | Mitglied(er) der Patentfamilie | Datum der Veröffentlichung |
|---|---|---|---|
| US 4670828 A | 02-06-1987 | EP 0258428 A1<br>JP 63502953 T<br>WO 8705163 A1 | 09-03-1988<br>27-10-1988<br>27-08-1987 |
| DE 102006010694 A1 | 20-09-2007 | KEINE | |

Für nähere Einzelheiten zu diesem Anhang : siehe Amtsblatt des Europäischen Patentamts, Nr.12/82

9

**IN DER BESCHREIBUNG AUFGEFÜHRTE DOKUMENTE**

**In der Beschreibung aufgeführte Patentdokumente**

- WO 2007048420 A1
- DE 102006010694 A1